(19) Europäisches Patentamt
European Patent Office
Office européen des brevets

(11) Veröffentlichungsnummer: **0 183 148**
**B1**

(12) **EUROPÄISCHE PATENTSCHRIFT**

(45) Veröffentlichungstag der Patentschrift: **23.08.89**

(51) Int. Cl.⁴: **C 08 J 9/12** // (C08L83/07, 83:05)

(21) Anmeldenummer: **85114563.1**

(22) Anmeldetag: **16.11.85**

(54) **Verfahren zur Herstellung eines Siliconschaums.**

(30) Priorität: **30.11.84 DE 3443677**

(43) Veröffentlichungstag der Anmeldung: **04.06.86 Patentblatt 86/23**

(45) Bekanntmachung des Hinweises auf die Patenterteilung: **23.08.89 Patentblatt 89/34**

(84) Benannte Vertragsstaaten: **DE FR GB IT**

(56) Entgegenhaltungen:
**US-A-4 026 843**
**US-A-4 026 844**
**US-A-4 418 157**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Krug, Wolfgang, Gerhart- Hauptmann-Strasse 17, D-5090 Leverkusen 3 (DE)**
Erfinder: **Knispel, Gottfried, Dr., Richard- Wagner-Strasse 3, D-5090 Leverkusen 1 (DE)**
Erfinder: **Wrobel, Dieter, Dr., Jakob- Böhme-Strasse 11, D-5000 Köln 80 (DE)**

**EP 0 183 148 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Herstellung hochwertiger Siliconschäume auf Basis von platinkatalysierten und in der Wärme härtbaren Organopolysiloxanmassen, die auf einfache Weise physikalisch verschäumt werden können.

Siloxanschäume sind seit längerer Zeit in der Technik bekannt. In der US-PS-2 857 343 wird das Verschäumen eines peroxidischen vulkanisierten Siliconkautschuks mit zersetzlichen Treibmitteln, die $N_2$ oder $CO_2$ abspalten, beschrieben. Auch die Freisetzung von $H_2$ durch die Reaktion von Stearinsäure mit Alkaliborhydriden kann zur Herstellung von Siliconschäumen verwendet werden (US-PS-2 951 819). Aus der US-PS-3 425 967 ist bekannt, daß Platin-katalysierte Additionssysteme mit Asbest oder faserförmigem Kaliumtitanat durch Treibmittel, wie Azobisisobuttersäurenitril, Dinitrosopentamethylentetramin, Benzolsulfonhydrazid, N,N'-Dimethyldinitrosoterephthalamid, p,p'-Oxybis(benzolsulfonhydrazid), Terephthalazid oder Azodicarbonamid, die in der Hitze Stickstoff abspalten, geschäumt werden können.

In der US-PS-3 677 981 werden ähnliche Platin-katalysierte Siliconmischungen, die keine faserförmigen Feststoffe enthalten, beschrieben, die Azobisisobuttersäurenitril, Dinitrosopentamethylentetramin, N,N'-Dimethyldinitrosoterephthalamid oder Diaminobenzol als Treibmittel enthalten.

Eine Reihe weiterer Vorschläge beschreibt die Verwendung von Wasserstoff, der sich bei der Reaktion von Hydrogensiloxanen mit Hydroxylgruppen bildet, als Treibmittel.

Aus den US-Patentschriften 2 956 032, 3 070 555, 3 271 332, 3 338 847, 3 428 580 und 3 429 838 sind verschäumbare Kondensationssysteme mit Metall-Salzen, wie Dibutylzinnlaurat, als Katalysatoren bekannt.

Die Verwendung solcher Metall-Salze, die die Kondensation von SiOH-Gruppen und gleichzeitig die Reaktion der Hydrogensiloxane mit den silanolhaltigen Siloxanen katalysieren, ermöglichen bereits bei Raumtemperatur eine Verschäumung und Vernetzung.

Diese Vorgehensweise läßt sich auch auf Platin-katalysierte Additionssysteme übertragen, wie US-PS-3 923 705 und US-PS-4 189 545 zeigen. Die Platinkomplexe katalysieren sowohl die Addition der Hydrogensiloxane an die Vinylsiloxane als auch die Umsetzung von SiH mit SiOH unter Bildung von Wasserstoff. Beide Reaktionen tragen zur Vernetzung und damit zur Vulkanisation der Mischungen bei. Statt der Siloxanole können auch Alkohole oder Wasser als hydroxylgruppenhaltige Verbindungen eingesetzt werden, wie US-PS-4 026 843 und US-PS-4 189 545 lehren.

Ein Nachteil dieser durch Wasserstoff geschäumten Massen bildet die Freisetzung eines leicht brennbaren Gases und die bei der Reaktion von SiH mit SiOH bzw. ROH oder $H_2O$ entstehenden zusätzlichen Vernetzungsstellen. Die für einen Schäumprozeß erforderlichen Mengen Wasserstoff bedingen relativ hohe Vernetzungsdichten, die schlechte Weitereißfestigkeiten erzeugen.

Es bestand daher das Bedürfnis, eine Verschäumung ohne Änderung der Vernetzungsreaktionen durchzuführen. Die bisher bekannten Systeme (US-PS-2 857 343, 3 425 967 und 3 677 981), deren Vulkanisation unabhängig von der Verschäumung abläuft, enthalten erst bei hohen Temperaturen zersetzliche Treibmittel und können daher die an sie gestellten Forderungen nicht befriedigend erfüllen.

Die Vorteile der spaltproduktfreien Additionsvulkanisation gegenüber der peroxidischen Vernetzung werden durch die Zersetzungsrückstände der Treibmittel wieder aufgehoben. Einen aufwendigen Ausweg bietet das mechanische Schäumen mit nachgeschaltetem Anlegen eines Vakuum (US-PS-4 368 279).

Bei dieser Situation war es Aufgabe der vorliegenden Erfindung, ein technisch einfaches Verfahren zur Herstellung von qualitativ hochwertigen und physiologisch unbedenklichen Schaumstoffen auf Siliconbasis zur Verfügung zu stellen.

Überraschenderweise wurde gefunden, daß Platin-katalysierte Additionssysteme, die im wesentlichen vinylhaltige Siloxane und spezielle Hydrogensiloxane enthalten, mit Wasser, physikalisch geschäumt werden können.

Gegenstand der vorliegenden Erfindung ist somit ein Verfahren zur Herstellung gegebenenfalls brandbeständiger, geschäumter Siliconmassen durch Verschäumen einer vernetzungsfähigen Masse, bestehend aus

a) 100 Gewichtsteilen eines vinylhaltigen Grundpolymeren der Formel

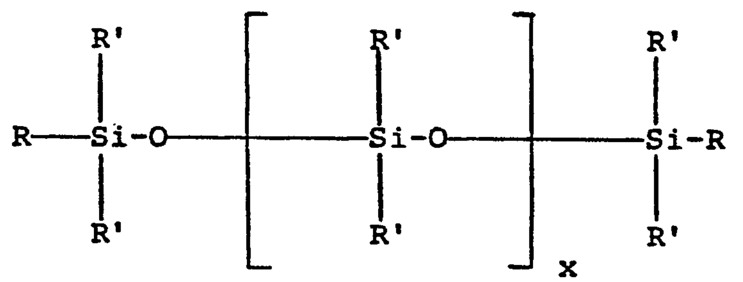

,

worin

R und R' Alkylreste mit 1 bis 8 Kohlenstoffatomen, Arylreste, Vinylreste und Fluoralkylreste mit 3 bis 8 Kohlenstoffatomen sind, so daß das Polymer 0,0002 bis 3 Gew.-% Vinylgruppen enthält, und

x so variiert wird, daß die Viskosität des Polymeren von 0,1 auf 1000 Pa.s (von 100 auf 1000 000 cP) bei 25°C

reicht,

b) 0 bis 10 Gewichtsteilen silanolhaltiger Siliconverbindung mit einer Viskosität im Bereich von 0,010 bis 1 Pa.s (10 bis 1000 cP) bei 25°C, wobei die organische Gruppe unter Alkylresten mit 1 bis 8 Kohlenstoffatomen, Vinylresten, Arylresten und Fluoralkylresten mit 3 bis 8 Kohlenstoffatomen so ausgewählt ist, daß das Silicon einen Silanolgehalt von 2 bis 10 % aufweist,

c) 0 bis 200 Gewichtsteilen eines Füllstoffes,

d) 1 bis 50 Gewichtsteilen eines Polysiloxans mit nicht-endständigen Si-H-Gruppen der Formel

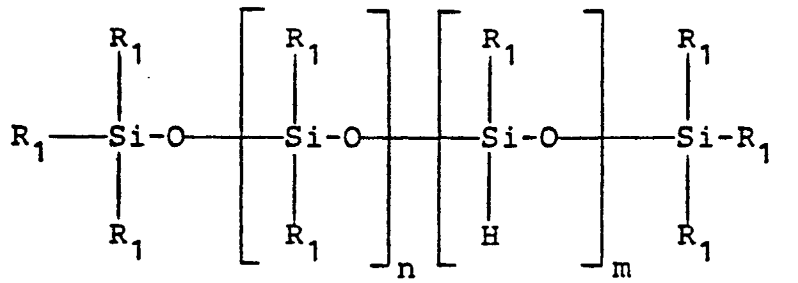

,

wobei

$R^1$ ein Alkylrest mit 1 bis 8 Kohlenstoffatomen oder Aryl- und Fluoralkylreste mit 3 bis 8 C-Atomen ist,

$m \geqslant 3$, und

n+m wird so variiert, daß das Polymer eine Viskosität im Bereich 0,005 - 0,1 Pa.s bei 25°C hat, und

e) 1 bis 250 ppm eines Platinkatalysators sowie gegebenenfalls Emulgatoren, Inhibitoren oder weiterer Hilfsmittel, welches dadurch gekennzeichnet ist, daß die vernetzungsfähige Masse, gegebenenfalls im Gemisch mit inerten Treibmitteln mit mindestens 1,5 Gew.-% Wasser bei Temperaturen von 50°C bis 150°C verschäumt wird.

Kinetische Untersuchungen zeigen, daß der Treibvorgang erst bei dem Siedepunkt des eingesetzten Schäummittels beginnt. Nennenswerte Mengen Wasserstoff, die zusätzliche Vernetzungsstellen liefern, werden nicht gebildet. Solche Massen ermöglichen damit die Verschäumung von Siliconmischungen, die in ihren mechanischen Daten optimiert sind. Insbesondere können Siliconmischungen mit relativ geringen Vernetzungsdichten und hohen Weiterreißfestigkeiten verschäumt werden.

Neben dem Einsatz von Wasser sind auch andere Verbindungen, z. B. Fluorkohlenwasserstoffe, die einen ausreichend niedrigen Siedepunkt besitzen und keine inhibierende Wirkung auf den Katalysator zeigen, einsetzbar.

Besonders vorteilhaft können relativ niedrigviskose Zweikomponenten-Siliconkautschuke, die im vulkanisierten Zustand hohe mechanische Festigkeiten erreichen, verschäumt werden. Die spaltproduktfreie Additionsvulkanisation kombiniert mit der Möglichkeit, $H_2O$ als unbrennbares Treibmittel einzusetzen, ermöglicht eine umweltschonende Herstellung von Siliconschäumen. Die Verteilung von siliconunlöslichen Schäummitteln im Kautschuk kann durch Emulgatoren verbessert werden. Aus der US-PS-4 026 844 geht hervor, daß in Additionssystemen, die mit Wasserstoff geschäumt werden, aliphatische Alkohole oder Metalloxide eine Verschäumung mit Mikrowellen ermöglichen. Entsprechend lassen sich bei den hier beanspruchten Massen z. B. schon mit 1,5 Gew.-% Wasser als Treibmittel Mikrowellenverschäumungen erreichen. Ein Zusatz von Ruß steigert die Mikrowellenempfindlichkeit und bildet zusätzlich Keime für die Schaumbildung.

Als Ausgangskomponenten a) und b) für das erfindungsgemäße Verfahren eignen sich bekannte Substanzen, wie sie z. B. aus Noll, Chemie und Technologie der Silicone, 2. Aufl. 1968, S. 212 bekannt sind.

Als Füllstoffe für das erfindungsgemäße Verfahren eignen sich z. B. pyrogene und gefällte, feinteilige Kieselsäuren mit einer BET-Oberfläche von 50 - 400 $m^2/g$. Derartige Füllstoffe können oberflächenmodifiziert sein, z. B. mit Siliciumorganischen Verbindungen. Die Modifizierung kann auch während der Einarbeitung durch Zusatz von z. B. Hexamethyldisilazan oder Tetramethyldivinylsilazan unter Zusatz von Wasser erreicht werden.

Weiter können als Füllstoffe Substanzen wie z. B. Diatomeenerden, feinteilige Quarzmehle, Kreiden, amorphe Kieselsäuren oder Ruße eingesetzt werden.

Die Pt-Katalysatoren sind die üblicherweise für die additionsvernetzenden Systeme eingesetzten Katalysatoren, insbesondere können z. B. Pt(O)-Komplexe mit Vinylsiloxanen als Liganden verwendet werden.

Erfindungsgemäß kann es erforderlich sein, Inhibitoren mitzuverwenden. Dafür eignen sich acetylenische Alkohole wie z. B. 2-Methyl-butin(3)-ol(2), Äthinylcyclohexanol, Tetramethyltetravinylcyclotetrasiloxan oder Tetramethyldivinyldisiloxan.

Ferner kann es erforderlich sein, Emulgatoren, wie z. B. Polyethylenglykole, Stabilisatoren, Einarbeitungshilfsmittel oder auch Zellregulatoren mitzuverwenden.

Das erfindungsgemäße Verfahren wird in einer allgemeinen Ausführungsform etwa wie folgt durchgeführt.

Das vernetzungsfähige Gemisch, bestehend aus dem vinylhaltigen Polymeren, dem Si-H-haltigen Polysiloxan mit nicht-endständigen Si-H-Gruppen, dem Katalysator, Vernetzungsinhibitor und einem Füllstoff, gegebenenfalls mit einem Beladungsmittel, wird mit einem nicht-wasserstoffbildenden Treibmittel, nämlich Wasser, gleichmäßig vermischt, gegebenenfalls unter Verwendung eines Einarbeitungshilfsmittels. Diese Mischung

wird durch Zuführung von Wärme (z. B. Mikrowellen, IR-Strahlung, Warmluft) verschäumt und gleichzeitig vernetzt.

Das erfindungsgemäße Verfahren ermöglicht die Herstellung von Silicon-Schäumen, deren mechanische Eigenschaften bei gegebener Schaumstruktur unabhängig vom Treibvorgang einstellbar sind. Insbesondere können weiterreißfeste und weichelastische Schäume hergestellt werden, die sich durch besonders niedrige Druckverformungsreste bei erhöhten Temperaturen auszeichnen.

Die vorliegende Erfindung soll anhand der folgenden Beispiele noch näher erläutert werden.

**Beispiel 1**

In einem Dissolver werden 88 Gew.-Teile vinylendgestopptes Polydimethylsiloxan mit einer Viskosität von 1 Pa.s/20°C, 3 Gew.-Teile einer siloxanbeladenen pyrogen hergestellten Kieselsäure mit einer spezifischen Oberfläche von 130 $m^2/g$ nach BET, 2,6 Gew.-Teile trimethylsiloxyendgestopptes Polydimethylsiloxan mit 20 Mol-% Si-H-Gruppen, 0,025 Gew.-Teile Tetramethyltetravinylcyclotetrasiloxan, 0,002 Gew.-Teile einer Komplexverbindung aus Platin und Tetramethyltetravinylcyclotetrasiloxan, 2 Gew.-Teile Wasser und 5 Gew.-Teile eines Emulgators der Struktur

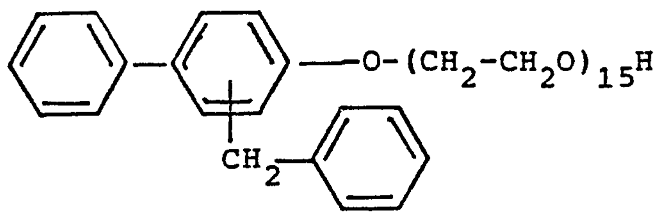

intensiv vermischt, so daß das Wasser fein verteilt im Siliconsystem vorliegt (Emulsion). Danach wird die Mischung im offenen PE-Becher in einem Mikrowellenofen erhitzt. Nach Erreichen von 100°C schäumt das Gemisch langsam auf und ist nach weiteren 10 Minuten zu einem elastischen Schaum niedriger Dichte ausgehärtet.

**Beispiel 2**

In 90 Gew.Teile vinylendgestopptes Polydimethylsiloxan mit einer Viskosität von 10 Pa.s und 9 Gew.-Teile kurzkettige hydroxyendgestopptes Polydimethylsiloxan mit einer Viskosität von 0,05 Pa.s werden bei 140°C 30 Gew.-Teile einer pyrogen hergestellten Kieselsäure mit einer spezifischen Oberfläche von 300 $m^2/g$ nach BET eingerührt und nach dem Abkühlen auf Raumtemperatur mit 130 Gew.-Teilen des obengenannten vinylendgestoppten Siloxans verdünnt.

Die so hergestellte Grundmischung wird wie im Beispiel 1 mit den dort angeführten Zusatzstoffen in folgenden Mengen: 1,9 Gew.-Teile Siloxan mit Si-H-Gruppen, 0,035 Gew.-Teile Tetramethyltetravinylcyclotetrasiloxan, 0,006 Gew.-Teile Pt-Katalysator, 2 Gew.-Teile Wasser und 5 Gew.-Teile Emulgator, vermischt und verschäumt.

**Beispiel 3**

In einem Kneter werden 47 Gew.-Teile vinylendgestopptes Polydimethylsiloxan mit einer Viskosität von 10 Pa.s mit 4 Gew.-Teilen Hexamethyldisilazan, 0,3 Gew.-Teilen Tetramethyldivinyldisilazan und 3 Gew.-Teilen Wasser gemischt und anschließend mit 18 Gew.-Teilen pyrogen hergestellter Kieselsäure mit einer spezifischen Oberfläche von 300 $m^2/g$ nach BET zu einer homogenen Masse verknetet (Einarbeitung des Füllstoffs gemäß DE-OS-2 535 334). Die Mischung wurde zunächst auf 130°C erwärmt und 1,5 Stunden im geschlossenen Kneter gerührt und danach bei 160°C unter Vakuum von Wasser und überschüssigem Silazan befreit. Nach dem Erkalten des Compounds wird die Mischung entsprechend Beispiel 1 mit folgenden Zusätzen vermischt und verschäumt:

24 Gew.-Teile vinylendgestopptes Polydimethylsiloxan mit einer Viskosität von 1 Pa.s, 7,8 Gew.-Teile Siloxan mit Si-H-Gruppen, 0,025 Gew.-Teile Tetramethyltetravinylcyclotetrasiloxan, 0,0023 Gew.-Teile Pt-Katalysator, 6 Gew.-Teile Wasser und 5 Gew.-Teile Emulgator.

Eine gaschromatographische Analyse der freigesetzten Gase zeigt einen Wasserstoffgehalt von 0,2 Vol.-%.

**Beispiel 4** (Vergleich)

Wie Beispiel 3 mit einem dimethylhydridosiloxyendgestoppten Polydimethylsiloxan mit einer Viskosität von 0,0015 Pa.s statt des in Beispiel 1 angeführten Siloxans mit Si-H-Gruppen mit gleicher Si-H-Konzentration im Compound zeigt unter den gleichen Bedingungen wie im Beispiel 3 einen Wasserstoffgehalt von 27 Vol.-%.

**Patentanspruch**

Verfahren zur Herstellung geschäumter Siliconmassen durch Verschäumen einer vernetzungsfähigen Masse, bestehend aus

a) 100 Gewichtsteilen eines vinylhaltigen Grundpolymeren der Formel

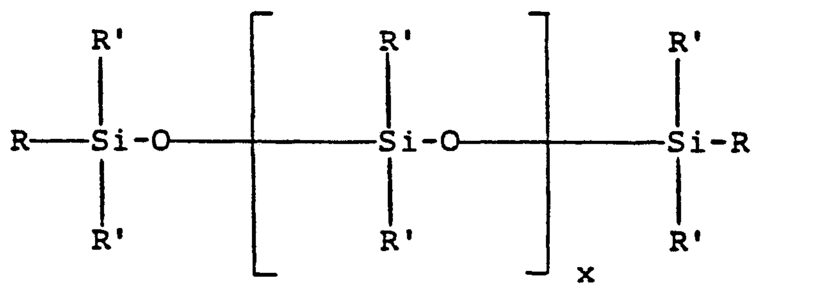

,

worin

R und R' Alkylreste mit 1 bis 8 Kohlenstoffatomen, Arylreste, Vinylreste und Fluoralkylreste mit 3 bis 8 Kohlenstoffatomen sind, so daß das Polymer 0,0002 bis 3 Gew.-% Vinylgruppen enthält, und

x so variiert wird, daß die Viskosität des Polymeren von 0,1 auf 1000 Pa.s (von 100 auf 1 000 000 cP) bei 25°C reicht,

b) 0 bis 10 Gewichtsteilen silanolhaltiger Siliconverbindung mit einer Viskosität im Bereich von 0,010 bis 1 Pa.s (10 bis 1000 cP) bei 25°C, wobei die organische Gruppe unter Alkylresten mit 1 bis 8 Kohlenstoffatomen, Vinylresten, Arylresten und Fluoralkylresten mit 3 bis 8 Kohlenstoffatomen so ausgewählt ist, daß das Silicon einen Silanolgehalt von 2 bis 10 % aufweist,

c) 0 bis 200 Gewichtsteilen eines Füllstoffes,

d) 1 bis 50 Gewichtsteilen eines Polysiloxans mit nicht-endständigen Si-H-Gruppen der Formel

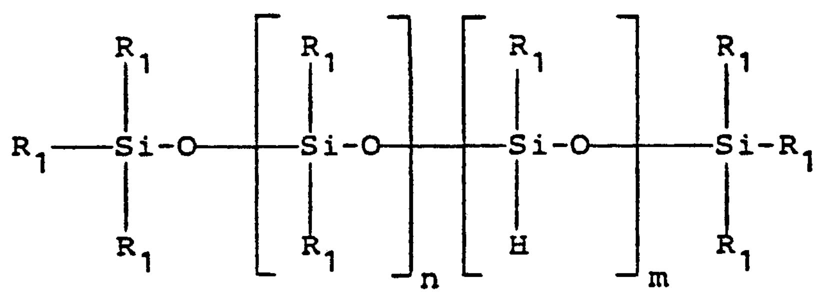

,

wobei

$R_1$ ein Alkylrest mit 1 bis 8 Kohlenstoffatomen oder Aryl- und Fluoralkylreste mit 3 bis 8 C-Atomen ist,

$m \geqslant 3$, und

n+m so variiert wird, daß das Polymer eine Viskosität im Bereich von 0,005 - 0,1 Pa.s bei 25°C hat, und

e) 1 bis 250 ppm eines Platinkatalysators, sowie gegebenenfalls Emulgatoren, Inhibitoren oder weiteren an sich bekannten Hilfsmitteln,

dadurch gekennzeichnet, daß die vernetzungsfähige Masse, gegebenenfalls im Gemisch mit inerten Treibmitteln, mit mindestens 1,5 Gew.-% Wasser bei Temperaturen von 50 bis 150°C verschäumt wird.

**Claim**

Process for the preparation of foamed silicon masses by the foaming of a cross-linkable mass consisting of

a) 100 parts by weight of a vinyl-containing basic polymer corresponding to the following formula:

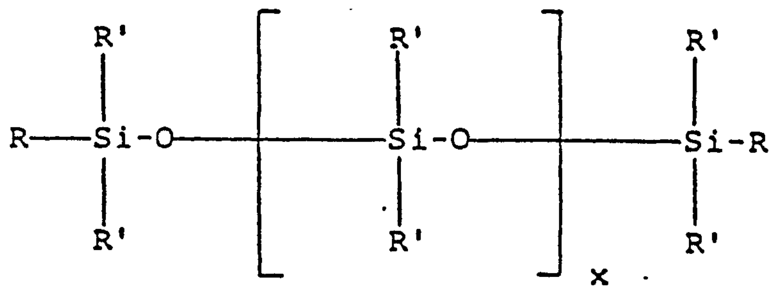 ,

wherein

R and R' are alkyl groups with 1 to 8 carbon atoms, aryl groups, vinyl groups and fluoroalkyl groups with 3 to 8 carbon atoms such that the polymer contains from 0.0002 to 3 % by weight of vinyl groups and

x is varied so that the viscosity of the polymer is in the range of from 0.1 to 1.000 Pa.s (from 100 to 1,000,000 cP) at 25° C.

b) from 0 to 10 parts by weight of a silanol-containing silicon compound having a viscosity in the range of from 0.010 to 1 Pa.s (10 to 1,000 cP) at 25° C, the organic group being selected from alkyl groups having 1 to 8 carbon atoms, vinyl groups, aryl groups and fluoroalkyl groups with 3 to 8 carbon atoms so that the silicon has a silanol content of from 2 to 10 %,

c) from 0 to 200 parts by weight of a filler,

d) from 1 to 50 parts by weight of a polysiloxane of the following formula containing non-terminal Si-H groups:

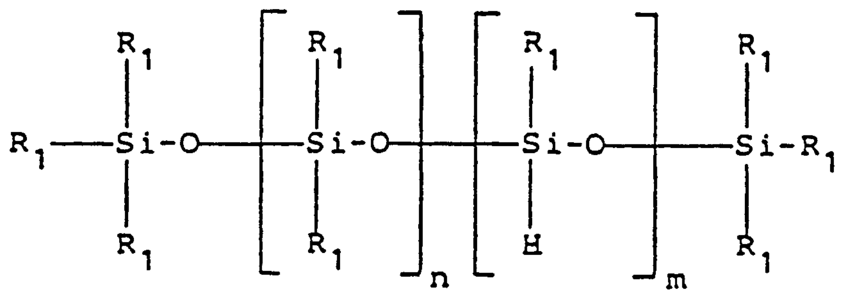

wherein

$R_1$ is an alkyl group with 1 to 8 carbon atoms or aryl and fluoroalkyl groups containing 3 to 8 carbon atoms,

$m \geqslant 3$ and

$n+m$ is varied so that the polymer has a viscosity in the range of from 0.005 to 0.1 Pa.s at 25° C, and

e) from 1 to 250 ppm of a platinum catalyst and optionally emulsifiers, inhibitors or other known auxiliary agents, characterised in that the cross-linkable mass, optionally in admixture with inert blowing agents, is foamed with at least 1.5 % by weight of water at temperatures of from 50 to 150° C.

**Revendication**

1. Procédé de production de mousses de silicone par moussage d'une composition apte à la réticulation, constituée de:

a) 100 parties en poids d'un polymère de base porteur de groupes vinyle de formule

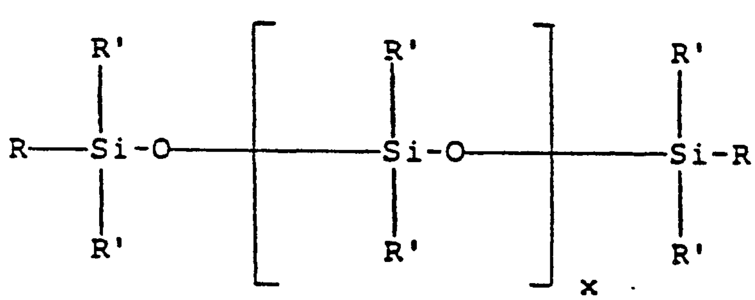

dans laquelle

R et R' sont des restes alkyle ayant 1 à 8 atomes de carbone, des restes aryle, des restes vinyle et des restes

fluoralkyle ayant 3 à 8 atomes de carbone, de manière que le polymère contienne 0,0002 à 3 % en poids de groupes vinyle, et

x varie de façon telle que la viscosité du polymère ait une valeur de 0,1 à 1000 Pa.s (de 100 à 1 000 000 cPs),

b) 0 à 10 parties en poids d'un composé de silicone contenant un silanol, ayant une viscosité comprise dans un intervalle de 0,010 à 1 Pa.s (10 à 1000 cPs) à 25° C, le groupe organique étant choisi parmi des restes alkyle ayant 1 à 8 atomes de carbone, des restes vinyle, des restes aryle et des restes fluoralkyle ayant 3 à 8 atomes de carbone de manière que la silicone ait une teneur en silanol de 2 à 10 %,

c) 0 à 200 parties en poids d'une charge,

d) 1 à 50 parties en poids d'un polysiloxane à groupes Si-H non terminaux de formule

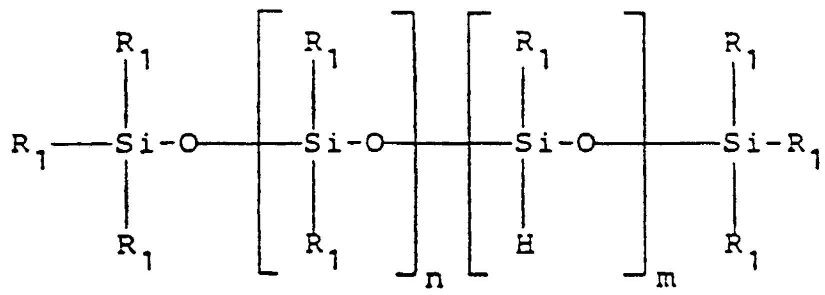

dans laquelle

$R^1$ est un reste alkyle ayant 1 à 8 atomes de carbone ou des restes aryle et fluoralkyle ayant 3 à 8 atomes de carbone,

m a une valeur supérieure ou égale à 3, et la somme

n+m varie de manière que le polymère ait une viscosité dans l'intervalle de 0,005 à 0,1 Pa.s à 25° C, et

e) 1 à 250 ppm d'un catalyseur au platine ainsi que, le cas échéant, des émulsionnants, des inhibiteurs ou d'autres adjuvants, qui est caractérisé en ce que le mélange apte à la réticulation est transformé en mousse à des températures de 50 à 150° C, le cas échéant en mélange avec des agents porogènes inertes avec au moins 1,5 % en poids d'eau.